Europäisches Patentamt

European Patent Office

Office européen des brevets

(11) Veröffentlichungsnummer: **0 437 286 A2**

## (12) EUROPÄISCHE PATENTANMELDUNG

(21) Anmeldenummer: **91103598.8**

(22) Anmeldetag: **22.01.88**

(51) Int. Cl.⁵: **B64F 1/22**

Diese Anmeldung is am 08 - 03 - 1991 als Teilanmeldung zu der unter INID-Kode 60 erwähnten Anmeldung eingereicht worden.

(30) Priorität: **23.01.87 DE 3701971**
**20.02.87 DE 3705402**

(43) Veröffentlichungstag der Anmeldung:
**17.07.91 Patentblatt 91/29**

(60) Veröffentlichungsnummer der früheren Anmeldung nach Art. 76 EPÜ: **0 276 779**

(84) Benannte Vertragsstaaten:
**AT CH DE ES FR GB IT LI NL SE**

(71) Anmelder: **Goldhofer Fahrzeugwerk GmbH & Co.**
**Donaustrasse 95**
**W-8940 Memmingen(DE)**

(72) Erfinder: **Bammel,Michael,Dipl.-Ing.(FH)**
**Im Wiblinger Hart 14**
**W-7900 Ulm 10(DE)**

(74) Vertreter: **Lemke, Jörg-Michael, Dipl.-Ing.**
**Oberländerstrasse 16a**
**W-8900 Augsburg(DE)**

(54) **Schleppfahrzeug zum Manövrieren von Flugzeugen.**

(57) Ein Schleppfahrzeug zum Bewegen von Flugzeugen ohne Schleppstange besitzt ein Fahrgestell (5), das zwischen den Rädern einer Radachse einen gabelförmigen Aufnahmeraum aufweist, in dem eine mit einer Hubvorrichtung zusammenwirkende, ein- und ausfahrbare Greif- und Einzugsvorrichtung (28, 68) angeordnet ist, mittels welcher das Bugrad des Flugzeuges erfaßbar und auf eine relativ zum Fahrgestell heb- und senkbare Schaufel (14) ziehbar ist. Dabei ist nur eine einzige Schaufel (14) zur Unterstützung des Bugrades im Bereich der Wirkungslinie der Bugradlast vorhanden, um Klemm- und Verformungskräfte auf das Bugrad während des Einziehvorgangs oder während des Anhebens zu vermeiden. Die Schaufel kann dabei um eine am Fahrgestell angeordnete Horizontalachse kippbar und bezüglich ihrer Kipplage relativ zum Fahrgestell gesteuert einstellbar sein. Dabei ist die Greif- und Einzugsvorrichtung (28, 68) mit der Schaufel (14) achsfest verbunden, so daß sich bei Bewegungen der Schaufel die Einspannung des Bugrades nicht änder t.

Fig. 1

EP 0 437 286 A2

## SCHLEPPFAHRZEUG ZUM MANÖVRIEREN VON FLUGZEUGEN

Die Erfindung betrifft ein Schleppfahrzeug zum Manövrieren von Flugzeugen ohne Schleppstange, dessen Fahrgestell zwischen den Rädern einer Radachse einen gabelförmigen Aufnahmeraum aufweist, in dem eine mit einer Hubvorrichtung zusammenwirkende, ein- und ausfahrbare Greif- und Einzugsvorrichtung angeordnet ist, mittels welcher das Bugrad des Flugzeugs erfaßbar und auf eine relativ zum Fahrgestell heb- und senkbare Schaufel ziehbar ist.

Es ist ein Schleppfahrzeug dieser Bauart bekannt (DE-PS 33 18 077), welches drei jeweils relativ schmale Hubschaufeln aufweist, die jeweils in Kippgelenken schwenkbar gelagert sind und von denen die eine dem fahrzeugseitigen Ende des Aufnahmeraums der Vorderseite des zu ergreifenden Bugrades, die beiden anderen Kippschaufeln hingegen dem offenen Ende des Aufnahmeraums und damit der hinteren Seite des Bugrades zugeordnet sind, und zwar in Bodennähe. Darüber hinaus ist die Greifvorrichtung aus dem gabelförmigen Aufnahmeraum nach hinten heraus bewegbar. Schließlich sind noch zusätzliche Niederhalter vorhanden, die zur Anlage am Bugrad im oberen Bereich dessen Umfangs kommen.

Dabei ist als nachteilig anzusehen, daß das Bugrad an Punkten seines Umfangs, die nicht seiner normalen, üblichen Auflage auf dem Erdboden entsprechen, erfaßt und zusammengedrückt, somit verformt wird, so daß es zu unerwünschten Beanspruchungen des Bugrades kommt. Ferner ist nachteilig, daß beim Einziehen des Bugrades in den Aufnahmeraum die bekannte Greifvorrichtung zunächst erheblich aus diesem Aufnahmeraum herausgefahren wird, somit über die Begrenzung der heckseitigen Öffnung des Aufnahmeraums hinausragt, was durch die erheblichen Längen der dabei entstehenden Hebelarme zu erhöhtem technischen Aufwand führt, um die Greifvorrichtung mechanisch bzw. festigkeitsmäßig zu beherrschen.

Die der Erfindung zugrunde liegende Aufgabe wird demgegenüber darin gesehen, ein Schleppfahrzeug der eingangs genannten Bauart zu schaffen, das einen einfacheren, mechanisch leichter beherrschbaren Aufbau mit weniger Bauteilen aufweist und ein Einklemmen des Bugrades bzw. zusätzliche Beanspruchung desselben weitgehend vermeidet.

Diese Aufgabe wird erfindungsgemäß dadurch gelöst, daß eine einzige Schaufel zur Unterstützung des Bugrades im Bereich der Wirkungslinie der Bugradlast vorhanden ist, und daß die Schaufel um eine gedachte Längsachse in eine Winkellage zur Horizontallage stufenlos einstellbar ist.

Während somit bei dem bekannten Schleppfahrzeug im Bereich der Wirkungslinie der Bugradlast, also in demjenigen Umfangsbereich des Bugrades, der normalerweise auf dem Boden aufruht, überhaupt keine Unterstützung vorhanden ist, vielmehr vor und hinter dieser Wirkungslinie durch drei nach Art von Klemmkeilen ausgebildete Hubschaufeln schräg nach oben zur Mitte des Bugrades wirkende Kräfte ausgeübt werden , von denen lediglich die Resultierende der Wirkungslinie der Bugradlast entgegengesetzt ist, was letzten Endes eine Klemmbeanspruchung des Bugrades bedeutet, ruht beim Gegenstand der Erfindung das Bugrad ganz normal praktisch in gleicher Weise auf der einzigen Schaufel auf, wie es sonst auf dem Boden aufzuruhen pflegt.

Fast alle Flugzeugfahrwerke bzw. Bugräder weisen Federbeine auf, welche die Verbindung vom Räderwerk zum Flugzeugbug bilden. Die Längsachse des jeweiligen Federbeins bildet fast immer einen Winkel zur Vertikalen. Dieser Winkel ist erforderlich, um dem Räderwerk bzw. Bugrad einen gewissen Nachlauf zu verleihen. Eine Drehung des Bugrades um die Längsachse des Federbeins, beispielsweise zur Steuerung des Flugzeugs am Boden, führt dabei zwangsläufig zu einer Neigung der Ebene des Bugrades gegenüber der Horizontal- bzw. Bodenebene, d.h. zu einem spitzen Winkel zwischen diesen beiden Ebenen, wie dies beispielsweise auch bei der Steuerbewegung des Vorderrades bei Zweirädern üblich ist. Damit wird deutlich, daß auch bei Kurvenfahrten des aus Schleppfahrzeug und Flugzeug bestehenden Fahrzeugverbandes eine derartige Drehung des Bugrades um die Längsachse des Federbeines auftreten muß, was zur erwähnten Schräglage des Bugrades auf der Schaufel führt. Auch hierbei lassen sich mit den bekannten Schleppfahrzeugen unerwün schte Klemm- und Biegekräfte zwischen Schleppfahrzeug und Bugrad durchwegs nicht vermeiden. Dadurch nun, daß erfindungsgemäß die Schaufel um eine gedachte Längsachse in eine Winkellage zur Horizontalachse stufenlos einstellbar ist, werden solche unerwünschten Beanspruchungen vermieden. Insbesondere dann, wenn man vorzugsweise den Angriffspunkt der Greif- und Einzugsvorrichtung oberhalb der Drehachse des Bugrades am Umfang desselben angreifen läßt, werden zusätzliche Niederhalter entbehrlich, was den Aufbau zusätzlich vereinfacht. Darüber hinaus erzielt man den Vorteil, daß die Greif- und Einzugsvorrichtung bodenfern angeordnet ist und nicht, wie bei dem geschilderten, bekannten Schleppfahrzeug, nahe den Aufnahmeflächen der dortigen, schmalen Kippschaufeln und damit in Bodennähe, was zu Bodenberührungen und eventuellen Beschädigungen führen kann.

Bei dem Gegenstand eines älteren Vorschlags (DE-OS 36 16 807) wird zwar bereits eine einzige Schaufel verwendet, jedoch muß unter Zuhilfenahme einer relativ aufwendigen Konstruktion eine Aufteilung des Fahrgestells in ein Vorder- und ein Hinterteil vorgenommen werden, die im Bereich einer horizontalen Knickachse anheb- und absenkbar sind, um die erforderliche Bewegung der Schaufel in Richtung zum Boden zur Aufnahme des Bugrades und wieder vom Boden weg zu ermöglichen.

Gemäß einer bevorzugten Ausführungsform ist die Schaufel über untere und obere Längslenker hebbar, senkbar und in eine Winkellage neigbar am Fahrgestell angeordnet und über Fluidzylinder betätigbar, wobei die oberen und unteren Längslenker ein Parallelogrammgestänge bilden, das einerseits am Fahrgestell und andererseits an der Schaufel angelenkt ist. Vorzugsweise schneiden sich die Wirkungslinien der oberen Längslenker in einem einen Pendelpunkt der Schaufel bildenden Punkt auf der gedachten Längsachse.

Ferner können die unteren Längslenker annähernd parallel zur Fahrzeuglängsachse angeordnet sein und mit ihren schaufelseitigen Anlenkpunkten an jeweils einer Seitenwand der Schaufel angreifen. Dabei ist die Anordnung so getroffen, daß die Schaufel einer Neigung des Bugrades selbsttätig anpaßbar ist.

Bei Vorhandensein nur eines einzigen Fluidzylinders zum Heben und Senken der Schaufel ist es zweckmäßig, die Wirkungslinie dieses Fluidzylinders bzw. dieser Fluidzylinder-Kolben-Einheit in die senkrechte Längsmittelebene der Schaufel zu legen, wobei diese Längsmittelebene die Fahrzeuglängsachse enthält.

Verwendet man hingegen zwei Fluidzylinder-Kolben-Einheiten zum Heben und Senken der Schaufel, ordnet man die Wirkungslinien dieser Einheit zweckmäßig spiegelsymmetrisch zur Längsmittelebene an. In diesem Falle sind die beiden Einheiten bezüglich ihres Fluids kommunizierend miteinander verbunden, um das selbsttätige Einstellen der Winkellage der Schaufel unter dem Einfluß der Bewegung der Bugräder bei Kurvenfahrt zu ermöglichen. Die kommunizierende Verbindung kann absperrbar sein.

Grundsätzlich sind die Greif- und Einzugsvorrichtung und eine dem Abschieben des Bugrades von der Schaufel am Ende des Manövriervorgangs dienende Ausstoßvorrichtung mit der Schaufel achsfest verbunden. Die Anordnung, d.h. die ein- und ausfahrbare Greif- und Einzugsvorrichtung nebst Ausstoßvorrichtung einerseits und die Schaufel andererseits, ist dabei in der Draufsicht jeweils im wesentlichen in H-Form ausgebildet.

Die Ausstoßvorrichtung besteht dabei zweckmäßig aus parallel zu den Trägern, vorzugsweise an diesen selber angeordneten Fluidzylinder-Kolben-Einheiten, deren eines Ende am Träger bzw. Schwenkarm angelenkt ist und deren anderes Ende ein Gleitstück aufweist, das in einer achsparallel am Träger bzw. Arm angeordneten Führungsschiene axial verschiebbar ist und an dem ein Ausstoßarm angeordnet ist.

Auf die mögliche Verwendung der Träger bzw, der Basiselemente der Träger als Schwenkarm bzw. -arme zum Anheben, Absenken und Schwenken der Schaufel wurde bereits verwiesen. Auch das Heben und Senken der Schaufel mittels eines einerseits am Fahrzeug und andererseits an der Schaufel angelenkten Parallelogrammgestänges wurde bereits erläutert. Schließlich ist auch noch auf die Möglichkeit hinzuweisen, die Schaufel mittels eines Hubschlittens heb- und senkbar am Fahrgestell anzuordnen.

Bei einer weiteren Ausführungsform der Erfindung bei Verwendung eines im wesentlichen vertikal verschwenkbaren Schwenkarms, an dem die Schaufel fest angeordnet und mit dem dieselbe anheb-, absenk- und schwenkbar ist, wobei schwenkbare Greifarme an den freien Enden der, zwei das Bugrad zwischen sich aufnehmende Träger aufweisenden, Greif- und Einzugsvorrichtung vorhanden sind, besteht der Schwenkarm zweckmäßig aus den beiden Trägern, die röhrenförmig ausgebildet und deren fahrzeugseitigen Enden um die Horizontalachse schwenkbar sind. Die beiden Träger weisen jeweils nach innen zum Bugrad hin in Längsrichtung verlaufende Führungsschlitze auf. In den Trägern ist jeweils ein axial verschiebbarer Gleitschuh geführt, der einen gegenüber der Wirkungslinie einer Zylinder-Kolben-Einheit exzentrisch um eine vertikale Achse schwenkbaren Hebelkopf aufnimmt, wobei am Schwenkende des Hebelkopfes der jeweilige Greiferarm angeordnet ist.

Die Verschwenkung des Hebelkopfs in dem Gleitschuh ist einerseits verriegelbar, während andererseits in ausgefahrener Endlage des Gleitschuhs in dem röhrenförmigen Träger diese Verriegelung zwischen Gleitschuh und Hebelkopf durch einen in seiner Achsrichtung und quer zum Gleitschuh bewegbaren Ausstoßbolzen aufhebbar und gleichzeitig der Gleitschuh im Träger verriegelbar ist.

Sämtlichen Ausführungsformen ist folgende Funktion gemeinsam:

Vor dem Heranfahren an das Bugrad werden die Ausschubvorrichtung und die Greif- und Einzugsvorrichtung ganz nach hinten ausgefahren und die zweckmäßig mit Stützrollen versehenen Greifarme der Greif- und Einzugsvorrichtung entweder nach hinten oder nach unten weggeschwenkt, um die Einfahröffnung des Aufnahmeraums für das Bugrad freizugeben. Die Schaufel befindet sich in der Fahrstellung, d.h. sie ist angehoben.

Das Schleppfahrzeug fährt jetzt so weit nach hinten, bis das Bugrad an den Ausstoßarmen der Ausstoßvorrichtung, die zweckmäßig ebenfalls Stützrollen aufweisen, anliegt. Sodann wird die Schaufel durch Einfahren des Hubzylinders bzw. der Hubzylinder abgesenkt, die Greifarme mit ihren Stützrollen werden hinter das Bugrad geschwenkt und die Feststellbremse des Fahrzeugs wird angezogen.

Nach dem Einfahren der Ausstoßvorrichtung wird das Bugrad dann durch Einfahren der Greif- und Einzugsvorrichtung so weit auf die Schaufel gezogen, daß es an den Stützrollen der Ausstoßarme der Ausstoßvorrichtung zur Anlage kommt. Durch entsprechende Steuerung der Hubzylinder wird die Schaufel mit dem Bugrad anschließend angehoben und gegebenenfalls am Rahmen des Fahrgestells verriegelt.

Weitere vorteilhafte Ausgestaltungen ergeben sich aus den Unteransprüchen.

Die Erfindung ist im folgenden anhand von in der Zeichnung dargestellten Ausführungsbeispielen näher erläutert.

Es zeigt:

Figur 1 eine erste Ausführungsform des Schleppfahrzeugs mit angehobener Schaufel in Seitenansicht;

Figur 2 weitere Einzelheiten der Ausführungsform nach Fig. 1;

Figur 3 das Schleppfahrzeug nach Fig. 1 mit ausgefahrener Greif- und Einzugsvorrichtung;

Figur 4 das Schleppfahrzeug nach Fig. 3 mit eingeschwenkten Greifarmen;

Figur 5 die Draufsicht auf das Schleppfahrzeug nach Fig. 3 mit ausgeschwenktem Greifarm (obere Hälfte) und eingeschwenktem Greifarm (untere Hälfte);

Figur 6 schematisiert und vergrößert die Seitenansicht der Schaufel mit prinzipieller Darstellung der Greif- und Einzugsvorrichtung in Anpassung an zwei verschiedene Bugräderdurchmesser;

Figur 7 den Schwenkmechanismus eines Greifarms in Draufsicht;

Figur 8 schematisiert einen teilweisen Schnitt durch eine weitere Ausführungsform einer Greif- und Einzugsvorrichtung;

Figur 9 einen Schnitt durch die Vorrichtung nach Fig. 8 längs der Linie IX-IX in Fig. 10;

Figur 10 einen Schnitt längs der Linie X-X in Fig. 8;

Figur 11 eine weitere Ausführungsform des Schleppfahrzeugs in der Seitenansicht schematisiert mit einer heb- und senkbaren sowie neigbaren Schaufel in angehobener Stellung;

Figur 12 eine Draufsicht auf die Ausführungsform nach Fig. 11;

Figur 13 Details der Ausführungsform nach Fig. 12 in vergrößerter Darstellung;

Figur 14 eine Seitenansicht der Darstellung nach Fig. 13 in angehobenem Zustand der Schaufel bei eingefahrenen Greif- und Einzugs-, sowie Ausstoßvorrichtungen;

Figur 15 gleiche Darstellung wie Fig. 14 in abgesenkter Stellung der Schaufel bei ausgefahrenen Greif- und Einzugs-, sowie Ausstoßvorrichtungen;

Figur 16 die Stirnansicht der Schaufel von der Fahrzeugseite her, links in angehobener und rechts in abgesenkter Stellung;

Figur 17 eine Stirnansicht gemäß Fig. 16 links bei geneigter Schaufel;

Figur 18 schematisiert eine Seitenansicht der Schaufel bei aufliegendem Bugrad;

Figur 19 die Stirnansicht des Bugrades nach Fig. 18 bei einer Kurvenfahrt des Schleppfahrzeugs.

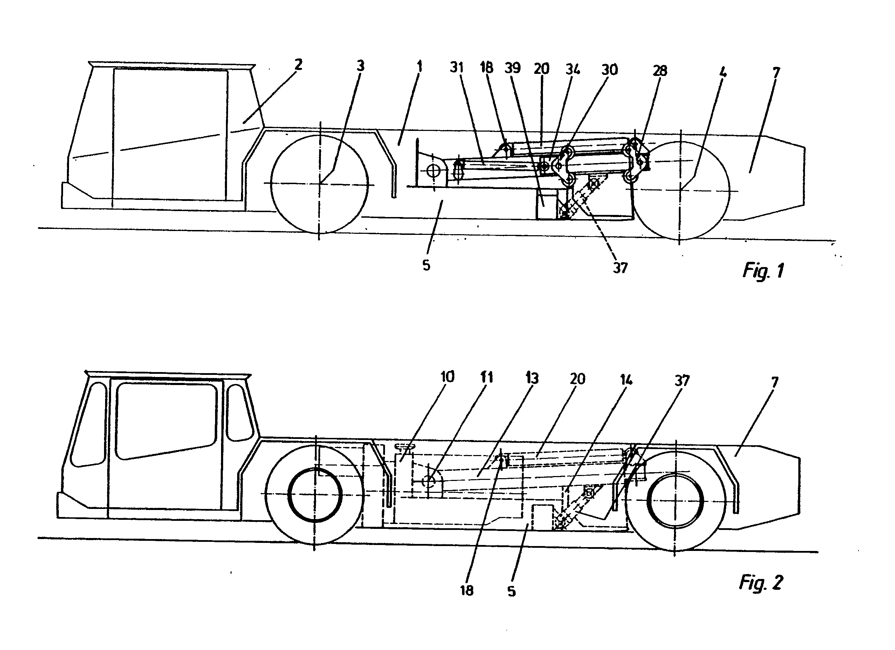

Das in den Figuren 1 bis 5 gezeigte Schleppfahrzeug 1 besitzt eine Fahrerkabine 2, die am vorderen Ende eines U-förmigen Fahrgestells 5 angeordnet ist, das bei dem gezeigten Ausführungsbeispiel eine Vorderachse 3 und eine Hinterachse 4 aufweist. Die Vorderachse 3 ist als Lenkachse ausgebildet, die Hinterachse 4 ist starr. Gegebenenfalls kann neben der Vorderachse 3 auch die Hinterachse 4 lenkbar sein. Statt der gezeigten zwei Achsen 3, 4 sind auch mehrachsige Fahrzeuge möglich.

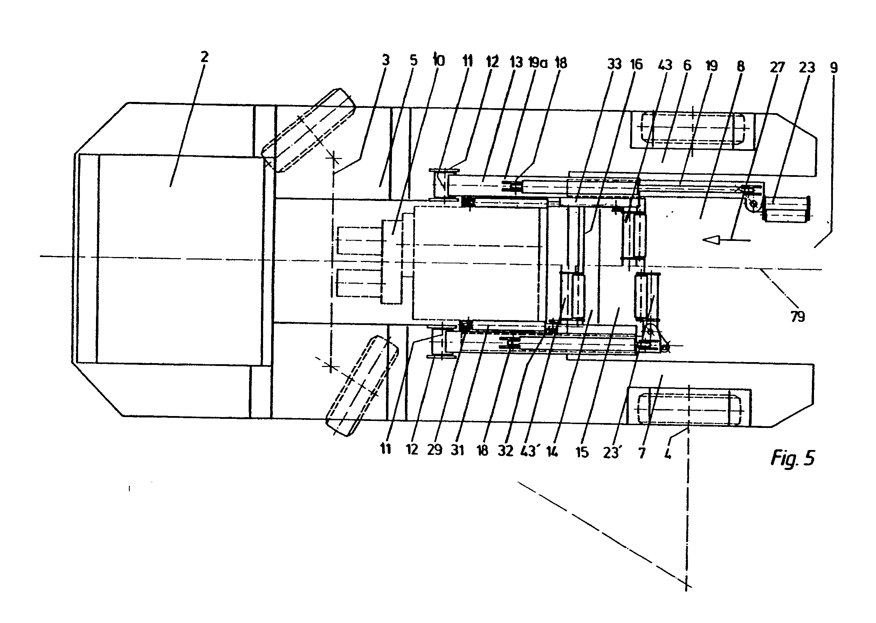

Gemäß Figur 5 weist das U-förmige Fahrgestell 5 zwei Schenkel 6, 7 auf, die einen gabelförmigen Aufnahmeraum 8 bilden, der zum Heck hin eine Aufnahmeöffnung 9 besitzt. Etwa in der Mitte des Fahrgestells 5 ist das Antriebs-Aggregat 10 angeordnet.

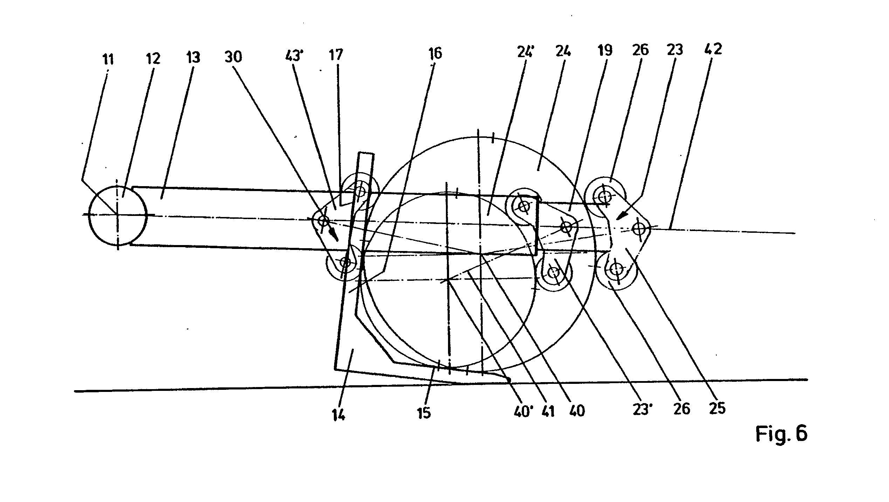

Die in dem Ausführungsbeispiel nach den Fig. 1 bis 5 dargestellte Hubvorrichtung besteht aus einer horizontalen Schwenkachse 11 mit Schwenklagern 12 für die einen Enden von einander gegenüberliegenden, einen Abstand voneinander aufweisenden Schwenkarmen 13. Die beiden einander gegenüberliegenden Schwenkarme 13 sind fest mit einer Schaufel 14 verbunden, so wie dies in Fig. 6 dargestellt ist.

Der Einfachheit halber wird im folgenden die gesamte Anordnung lediglich für die eine Seite des Fahrzeuges 1 beschrieben, weil die Anordnung symmetrisch zur Längsmittelachse 79 des Fahrzeuges 1 ist (Fig. 5).

Die Schaufel 14 weist ein L-förmiges Profil auf und besteht aus einer annähernd vertikalen Stirnwand 16, an die sich eine bodennahe Unterstützungsfläche 15 anschließt, auf der dann das Bugrad 24, 24' eines Flugzeuges aufruhen wird. Der um eine Schwenkachse 11 mit einem Schwenklager 12 gelagerte Schwenkarm 13 ist über eine Verbindungsstelle 17 mit der Stirnwand 16 der Schaufel 14 verbunden. Es handelt sich hier also um einen einarmigen Hebel, wobei die Schaufel 14 am freien, schwenkbaren Ende des einarmigen Hebels bzw. Schwenkarms 13 angeordnet ist.

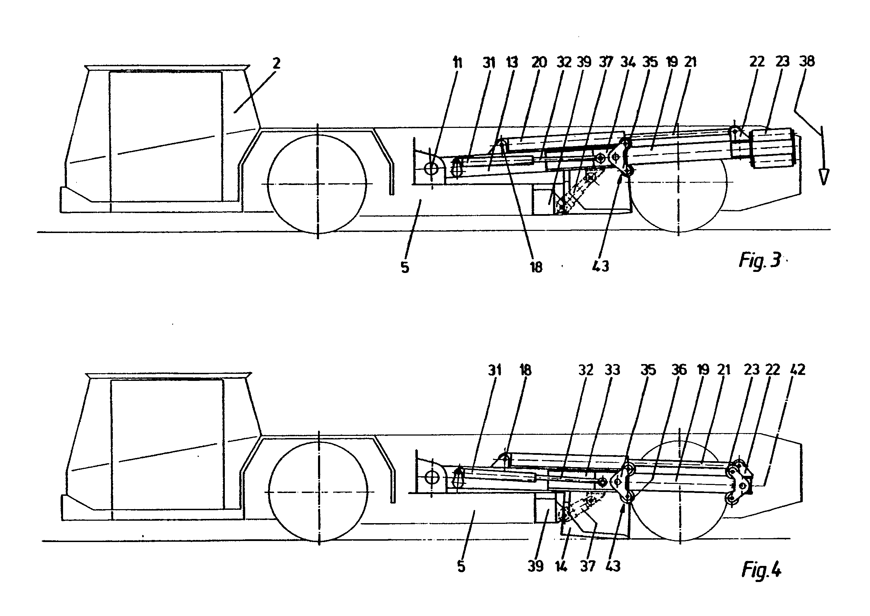

Zum Verschwenken der beiden einander gegenüberliegenden Schwenkarme 13 und der fest dazwischen liegenden Schaufel 14 sind Fluidzylinder 37 vorgesehen, die an der Unterseite jedes Schwenkarmes angreifen, und zwar jeweils am unteren Teil des Fahrgestells 5 an einem Querträger 39 einerseits und an der Unterseite des jeweiligen Schwenkarmes 13 gemäß den Fig. 1 bis 4 andererseits und insgesamt eine Hubvorrichtung bilden. Die Fig. 1 und 3 zeigen die angehobene Stellung der Hubvorrichtung. Bei Betätigung der Fluidzylinder 37 erfolgt eine Absenkung der gesamten Hubvorrichtung in Pfeilrichtung 38, womit die Hubvorrichtung in die Stellung nach Fig. 4 übergeht, so daß die Schaufel 14 mit ihrer bodenseitigen Unterstützungsfläche 15 auf dem Boden aufsetzt.

Es ist zu betonen, daß auch eine in der Zeichnung nicht erläuterte Ausführungsform möglich ist, derart, daß der Schwenkarm 13 mit seiner Schwenkachse 11 gemäß Fig. 6 entfällt und daß stattdessen die Schaufel 14 selber im Bereich etwa der Verbindungsstelle 17 schwenkbar am Fahrgestell 5 im Bereich einer horizontalen Schwenkachse (ähnlich der Schwenkachse 11) gelagert ist. Der in den Fig. 1 bis 4 gezeigte Hubantrieb aus Fluidzylindern 37 würde dann unmittelbar unterhalb der Schaufel an deren freiem, schwenkbaren Ende ansetzen.

Ein weiteres, in der Beschreibungseinleitung erwähntes Ausführungsbeispiel bezieht sich darauf, daß die Schaufel nicht schwenkbar ist, sondern heb- und senkbar in einer im wesentlichen vertikalen Ebene. Das heißt, es entfällt sowohl der Schwenkarm 13 mit seiner horizontalen Schwenkachse 11 als auch die soeben beschriebene Schwenklagerung der Schaufel 14 unmittelbar am Fahrgestell 5. In diesem Fall würde die Schaufel 14 als Hubschlitten ausgebildet sein, der in einer entsprechenden, im wesentlichen in vertikaler Ebene ausgerichteten, Längsführung heb- und senkbar am Fahrgestell 5 angeordnet ist. Statt einer solchen Hubführung ist auch ein Parallelogrammgestänge möglich, welches mit seinem einen Ende an der Schaufel ansetzt und mit seinem anderen Ende am Fahrgestell, so daß durch Betätigung eines Hubantriebes die Schaufel 14 ebenfalls in im wesentlichen vertikaler Ebene gehoben und abgesenkt werden kann.

Im folgenden wird nun die Greif- und Einzugsvorrichtung und hiervon zunächst die Einzugsvorrichtung für sich im einzelnen beschrieben.

Die Fig. 1 und 2 zeigen die Einzugsvorrichtung in eingefahrenem Zustand, die Fig. 3 zeigt die Einzugsvorrichtung in ausgefahrenem und angehobenem Zustand, während die Fig. 4 die Einzugsvorrichtung im ausgefahrenen und abgesenkten Zustand zeigt. Die Einzugsvorrichtung besteht hierbei aus dem Basiselement 19a eines Teleskopträgers 19a, 19 (Fig. 5), das im vorliegenden Ausführungsbeispiel identisch mit dem Schwenkarm 13 ist.

Es wäre auch möglich, ein gesondertes Basiselement zu verwenden und oberhalb oder unterhalb des Schwenkarmes anzuordnen. In dem Basiselement 19a teleskopartig verschiebbar ist ein Verlängerungselement 19 angeordnet, wobei der Verschiebeantrieb durch eine Fluidzylinder-Kolben-Einheit 20 erfolgt, die mit ihrem einen Ende auf der Oberseite des Schwenkarmes 13 in einer Schwenkachse 18 aufgenommen ist und die mit ihrer Kolbenstange 21 über ein Verbindungsstück 22 mit dem hinteren, freien Ende des Verlängerungselements 19 verbunden ist. Durch Betätigung der Einheit 20 wird das Verlängerungselement 19 aus dem Basiselement 19a in Pfeilrichtung 27 und in Gegenrichtung hierzu bewegt. Es ist vorgesehen, die Länge des Verlängerungselements 19 so zu bemessen, daß ein am hinteren, freien Ende desselben angeordneter Greifarm 23 nicht über die Begrenzung der heckseitigen Aufnahmeöffnung 9 hinausragt. Diese Dimensionierung wird bevorzugt, um zu vermeiden, daß das Verlängerungselement 19 derart lang werden kann, daß die gesamte Einzugsvorrichtung mechanisch nur schwer zu beherrschen wäre.

Der am hinteren Ende des Verlängerungselement 19 angeordnete Greifarm 23 besteht im vorliegenden Ausführungsbeispiel nach den Fig. 1 bis 6 aus einer Wiege 25, die schwenkbar an dem Verlängerungselement 19 gelagert ist und die im Abstand voneinander angeordnete, zueinander parallele Rollen 26 trägt.

Wichtig gemäß der vorliegenden Erfindung ist, daß der Greifarm 23 stets oberhalb der Drehachse 40 des zu ergreifenden und einzuziehenden Bugrades 24 angreift. Dadurch wird gewährleistet, daß die Angriffslinie 41 stets schräg nach unten in Richtung zum Boden geneigt ist und neben der in horizontaler Ebene wirkenden Einzugskraft auf das Bugrad 24 gleichzeitig eine Niederhaltungskraft ausgeübt wird.

In der Fig. 6 ist erläutert, daß die Einzugsvorrichtung infolge der Wiege 25 sowohl an einem Bugrad 24 mit relativ großem Durchmesser als auch an einem Bugrad 24' mit kleinerem Durchmesser angreifen kann. In allen Fällen ist dabei gewährleistet, daß der Angriffspunkt der Greifarme 23, der im Bereich der Längsachse 42 des Schwenkarmes 13 liegt, stets oberhalb der Drehachse 40 des jeweiligen Bugrades 24, 24' liegt. Die Einheit 20 mit Kolbenstange 21 ist hier übersichtlichkeitshalber weggelassen.

Neben der hier gezeigten einfachen Greifarm-Anordnung mit einander gegenüberliegenden Greifarmen 23 nach Fig. 5 ist es auch möglich, am Außenumfang des Bugrades 24 mehr als einen Greifarm angreifen zu lassen; für diesen Fall wäre dann beispielsweise eine halbrunde Anordnung vorzusehen, bei der mehrere Wiegen 25 gemäß Fig. 6 mit zugeordneten Rollen 26 schwenkbar in Form eines Halbrundprofils anzuordnen wären, so daß damit ein größerer Umfang des Bugrades 24 erfaßt werden könnte.

Die insgesamt mit dem Bezugszeichen 28 (Fig. 1) bezeichnete Greif- und Einzugsvorrichtung wird also gemäß Fig. 3 zunächst ausgefahren, wobei die Greifarme 23 ihre ausgeschwenkte Stellung gemäß der oberen Darstellung in Fig. 5 einnehmen. Das Fahrzeug 1 wird sodann mit seinem heckseitigen Aufnahmeraum 8 relativ zu dem Bugrad 24, 24' des zu bergenden Flugzeuges so manövriert, daß das Bugrad 24, 24' im Aufnahmeraum 8 steht. Die in ausgeschwenkter Stellung befindlichen Greifarme 23 werden dann in Pfeilrichtung 49 (Fig. 5 unten und 7) eingeschwenkt, so daß sie sich gemäß Fig. 6 hinter dem Bugrad 24 befinden und gegebenenfalls auch gleich anlegen. Die einander gegenüberliegenden Einheiten 20 werden betätigt, wodurch die Verlängerungselemente 19 in Pfeilrichtung 27 (Fig. 5) in die Basiselemente 19a eingefahren werden und das Bugrad 24 dann aufgrund dieser Einzugskraft auf die auf den Boden abgesenkte Unterstützungsfläche 15 der Schaufel 14 hinaufrollt, was wiederum in Fig. 6 dargestellt ist.

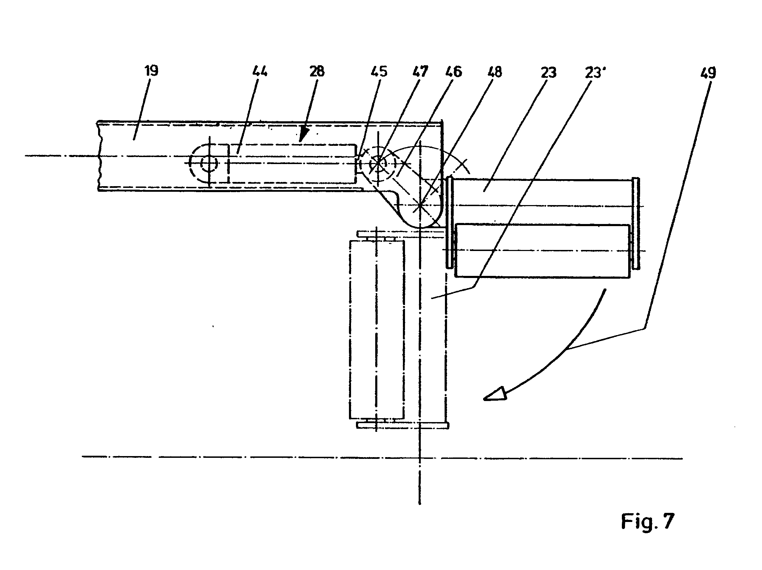

Der Schwenkantrieb der Greifarme 23 zum Verschwenken in Pfeilrichtung 49 und in Gegenrichtung hierzu (vergl. Fig. 7) kann verschieden ausgebildet sein. In Fig. 7 ist gezeigt, daß das Verschwenken des jeweiligen Greifarmes 23 über eine eigene Fluidzylinder-Kolben-Einheit 44 erfolgt, die im Verlängerungselement 19 angeordnet ist. Dabei ist das eine Ende der Einheit 44 fest mit dem Verlängerungselement 19 verbunden, während ihre Kolbenstange 45 über ein Schwenklager 47 an einem Hebelarm 46 ansetzt, dessen anderes Ende in einem Drehpunkt 48 gelagert ist, der am Verlängerungselement 19 angeordnet ist. An diesem anderen Ende ist der Greifarm 23 drehfest verbunden. Wird nun die Einheit 44 gemäß Fig. 7 betätigt, dann fährt die Kolbenstange 45 aus und das Schwenklager 47 führt eine Kreisbogenbewegung um den Drehpunkt 48 aus, wodurch der Greifarm 23 in Pfeilrichtung 49 in seine Stellung 29' eingeschwenkt wird.

Im folgenden wird nun die Ausstoßvorrichtung 30 (Fig. 1) beschrieben, die dazu dient, das auf der Unterstützungsfläche 15 lagernde Bugrad 24 wieder von der Schaufel 14 herunterzubefördern.

Aus Fig. 6 ist zunächst erkennbar, daß die Greif- und Einzugsvorrichtung 28 das Bugrad 24 so weit auf die Schaufel 14 hinaufbefördert, daß es wahlweise entweder an der Stirnwand 16 anliegt oder an Rollen der Ausstoßvorrichtung 30, die der Einzugsvorrichtung 28 gegenüberliegend und mit dieser fluchtend auf der Längsachse 42 angeordnet ist.

Die Ausstoßvorrichtung besteht im gezeigten Ausführungsbeispiel nach den Fig. 1 bis 4 aus einer Fluidzylinder-Kolben-Einheit 31, die mit ihrem einen Ende im Bereich einer Schwenkachse 29 (Fig. 5) am Basiselement 19a angeordnet ist. Die Kolbenstange 32 der Einheit 31 greift gemäß Fig. 3 an einem Gleitschuh 34 an, der in der Längsachse 42 in einer U-förmigen Führungsschiene 33 (Fig. 4) verschiebbar ist. Am Gleitschuh 34 schwenkbar ist wiederum eine Wiege 35 gelagert, an der zwei einander gegenüberliegende Rollen 36 befestigt sind. Es werden hierdurch Ausschubarme 43 ausgebildet, die in Pfeilrichtung 27 (Fig. 5) durch Betätigung der Einheiten 31 entweder einfahrbar sind in ihre Stellung 43' (Fig. 5 unten) oder herausfahrbar sind (Fig. 5 oben).

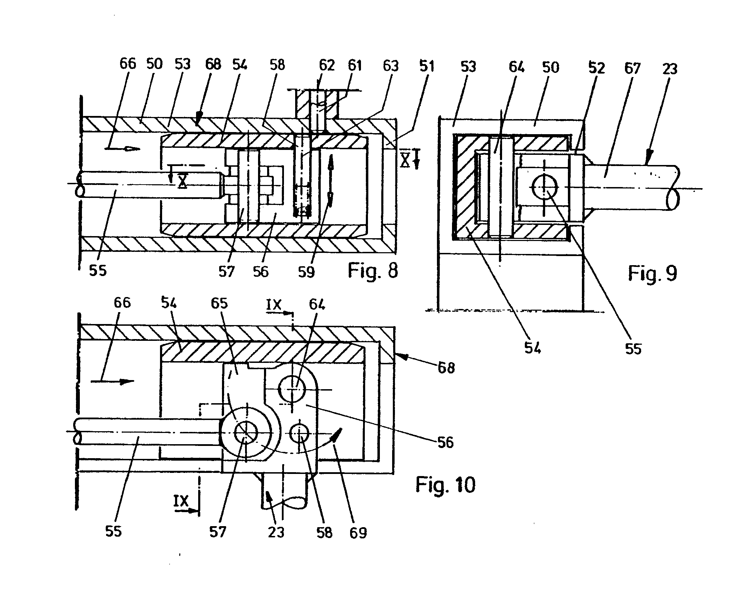

In den Fig. 8 bis 10 ist ein weiteres Ausführungsbeispiel für den Schwenkantrieb der Greifarme 23 der Greif- und Einzugsvorrichtung dargestellt, Diese Einzugsvorrichtung ist mit dem Bezugszeichen 68 bezeichnet, weil sie sich in ihrer Funktion von der Einzugsvorrichtung 28 des Ausführungsbeispiels nach den Fig. 1 bis 7 unterscheidet. Die Einzugsvorrichtung 68 besteht aus einseitig schwenkbar am Fahrgestell 5 gelagerten, röhrenförmigen Trägern 50, in denen axial verschiebbar jeweils ein Gleitschuh 54 angeordnet ist, der einen in vertikaler Achse schwenkbaren Hebelkopf 56 aufnimmt. Der Hebelkopf 56 ist bezüglich des Angriffspunktes (Bolzen 57) einer Kolbenstange 55 exzentrisch in dem Gleitschuh 54 gelagert. Am freien Schwenkbereich des Hebelkopfs 56 ist der Greifarm 23 angeordnet. Vorteil dieser Ausführung ist, daß für den Schwenkantrieb des Greifarmes 23 und für den Längsantrieb der Einzugsvorrichtung in Pfeilrichtung 27 und in Gegenrichtung hierzu nur eine einzige Fluidzylinder-Kolben-Einheit erforderlich ist, deren Kolbenstange 55 in den Fig. 8 bis 10 dargestellt ist. Hierzu ist eine Verriegelungsanordnung erforderlich, die in der Fig. 8 kurz vor Erreichen ihrer Verriegelungsstellung gezeigt ist. Der Träger 50 besteht hierbei aus einem Vierkantrohr bzw. C-förmigen Profil, in dessen Innenraum der Gleitschuh 54 durch Antrieb der Kolbenstange 55 über einen nicht näher dargestellten Fluidzylinder längsverschiebbar ist. Das C-förmige Profil der Träger 50 bildet gemäß Fig. 9 einen in Längsrichtung verlaufenden durchgehenden Schlitz 52, durch den ein Verbindungsarm 67 zum Greifarm 23 hindurchgreift.

Wird nun durch Antrieb der Kolbenstange 55 in Pfeilrichtung 66 der Gleitschuh 54 gegen eine innenseitige Anschlagfläche 51 des Trägers 50 bewegt, dann kommt ein im Gleitschuh 54 federbelastet gelagerter und in den Pfeilrichtungen 59 axial verschiebbarer Verriegelungsbolzen 58 in Fluchtstellung zu einem im Träger 50 koaxial verschiebbaren Ausstoßbolzen 61, der hydraulisch, pneumatisch oder elektromechanisch angetrieben ist. Sobald also die Längsachse 62 des Ausstoßbolzens 61 mit der Längsachse 63 des Verriegelungsbolzens 58 fluchtet, wird der Ausstoßbolzen 61 durch einen nicht näher dargestellten Antrieb nach unten verschoben, so daß der Verriegelungsbolzen 58 in Pfeilrichtung 59 nach unten gegen die Kraft der Feder verschoben und hierdurch die Verriegelung zwischen dein Hebelkopf 56 und dem Gleitschuh 54 aufgehoben wird. Gleichzeitig stellt der Ausstoßbolzen 61 eine Verriegelung zwischen dem Träger 50 und dem Gleitschuh 54 her, so daß dieser im Träger 50 arretiert ist.

Sobald der Verriegelungsbolzen 58 die Verschwenkung des Hebelkopfes 56 freigibt, führt ein weiterer Antrieb der Kolbenstange 55 in Pfeilrichtung 66 zu einem Verschwenken des Hebelkopfs 56 in Pfeilrichtung 69 um den Lagerbolzen 64. Das Verschwenken erfolgt solange, bis ein Anschlag 65 des Hebelkopfs 56 an der Innenwand des Gleitschuhs 54 (Fig. 10) erfolgt. Das Verschwenken des Hebelkopfs 56 ist also dadurch bedingt, daß die Kolbenstange 55 mit ihrem Bolzen 57 in Bezug auf den Lagerbolzen 64 exzentrisch am Hebelkopf 56 angreift.

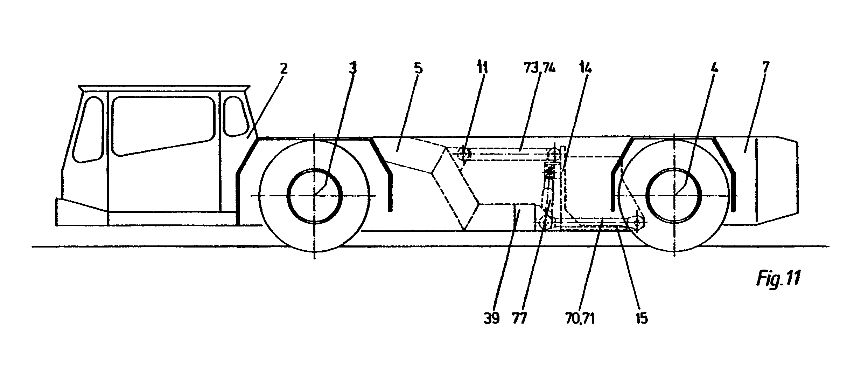

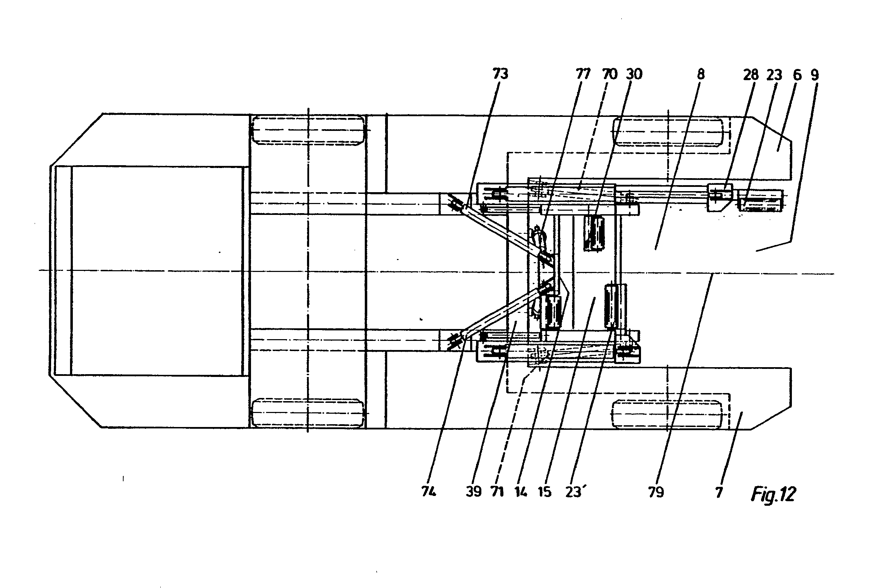

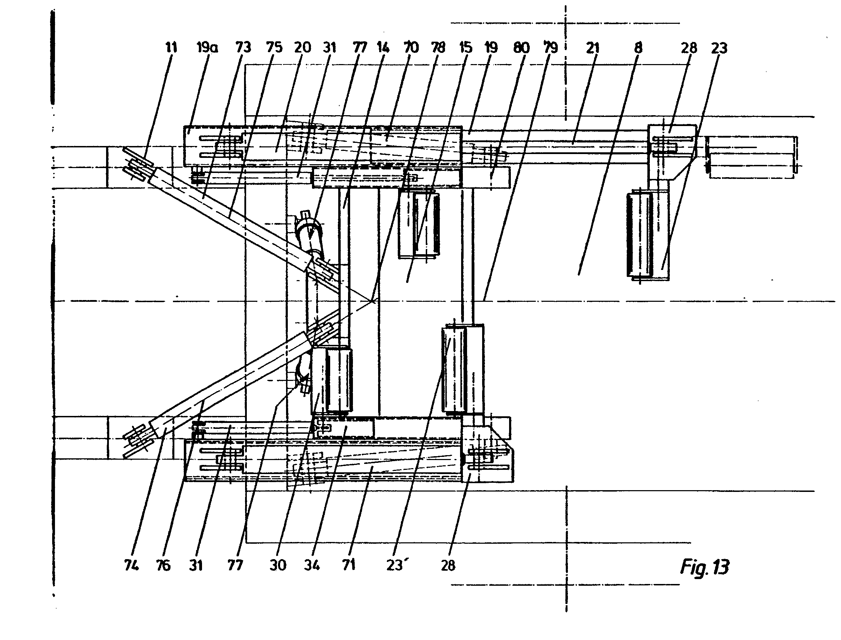

In Fig. 11 ist ein weiteres Ausführungsbeispiel des erfindungsgemäßen Schleppfahrzeugs gezeigt, die eine heb- und senkbare sowie neigbare Schaufel 14 aufweist. Die Schaufel ist hierbei über obere Längslenker 73, 74 und untere Längslenker 70, 71 schwenkbar und neigbar am Fahrgestell 5 gelagert, wobei die oberen Längslenker 73, 74 und die unteren Längslenker 70, 71 ein Parallelogrammgestänge bilden, an dessen freien schwenkbaren vier Punkten die Schaufel 14 ansetzt. Zum Heben und Senken der Schaufel 14 sind eine oder mehrere Fluidzylinder-Kolben-Einheiten 77 vorgesehen. Aus der Darstellung in den Fig. 12 und 13 ist erkennbar, daß die Wirkungslinien 75, 76 der oberen Längslenker 73, 74 sich in einem Pendelpunkt 78 schneiden, der in der Fahrzeuglängsachse 79 liegt. Damit wird gewährleistet, daß das obere, freie Ende der Schaufel 14 nicht seitlich aus der Fahrzeuglängsachse 79 verschiebbar ist.

Die Wirkungslinien der unteren Längslenker 70, 71 sind hierbei annähernd parallel oder allenfalls in spitzem Winkel zur Fahrzeuglängsachse 79 angeordnet, was gewährleistet, daß die den Boden der Schaufel 14 bildende Unterstützungsfläche 15 die im vorliegenden Ausführungsbeispiel geforderte Neigung zur Horizontalebene, d.h. um eine zur Längsachse im wesentlichen parallele Achse, ausführen kann.

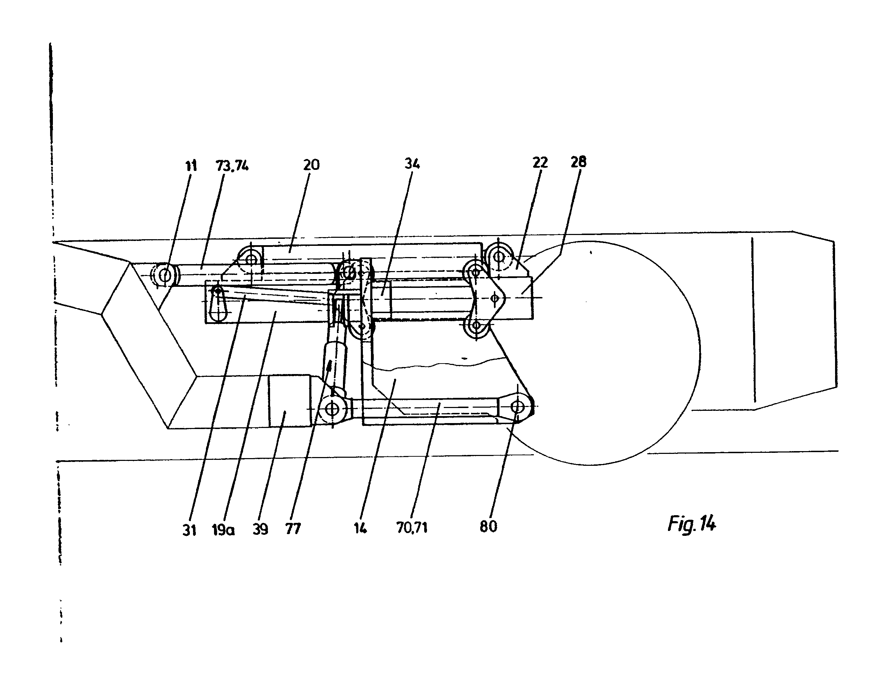

Die Fig. 14 zeigt die gleiche Ausbildung wie die Fig. 11 bis 13, wobei die Greif- und Einzugsvorrichtung 28 und Ausstoßvorrichtung 30 eingefahren sind.

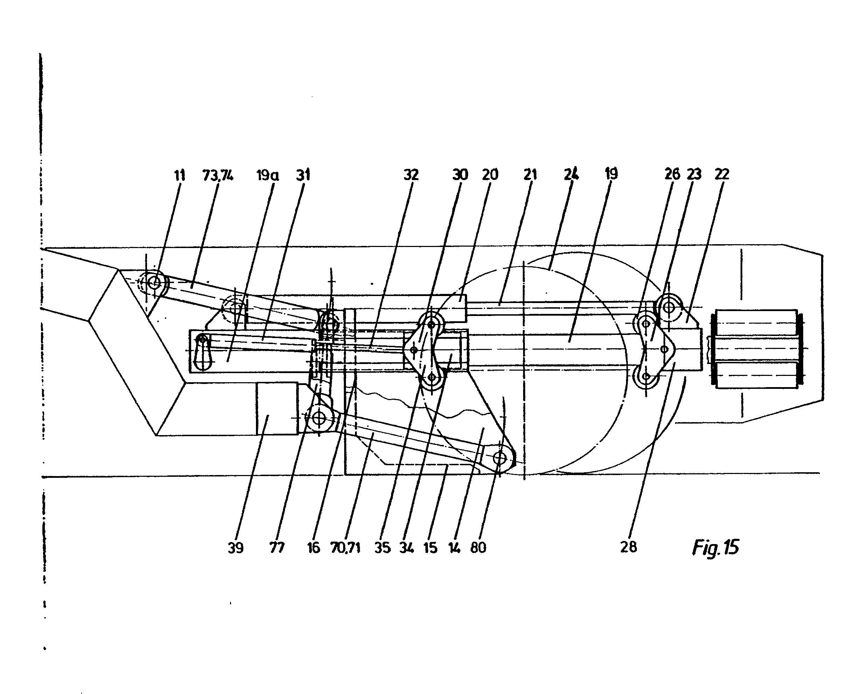

In Fig. 15 ist die gleiche Ausbildung wie Fig. 14 gezeigt, wobei, wie n allen Zeichnungen, gleiche Teile mit gleichen Bezugzeichen versehen sind. Die Schaufel 14 ist auf den Boden abgesenkt und die Einzugsvorrichtung 28 sowie die Ausstoßvorrichtung 30 sind ausgefahren. Hierbei ist das Schleppfahrzeug mit seiner auf den Boden abgesenkten Schaufel 14 dicht an das Bugrad 24 herangefahren.

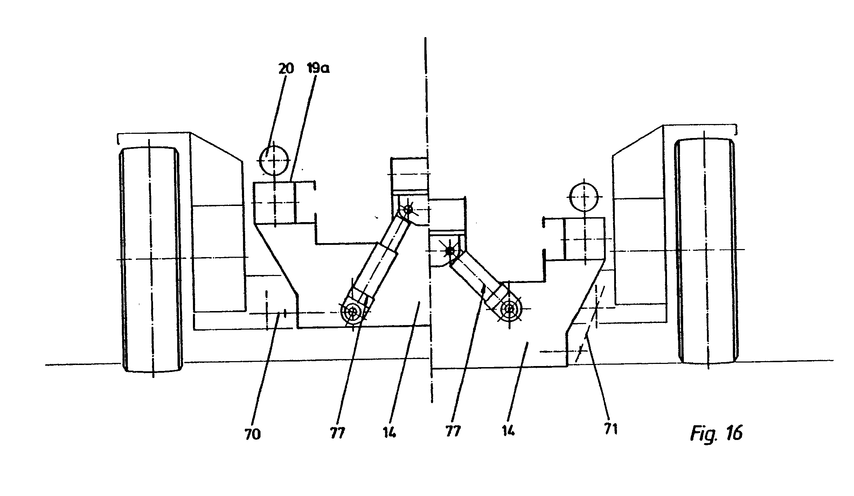

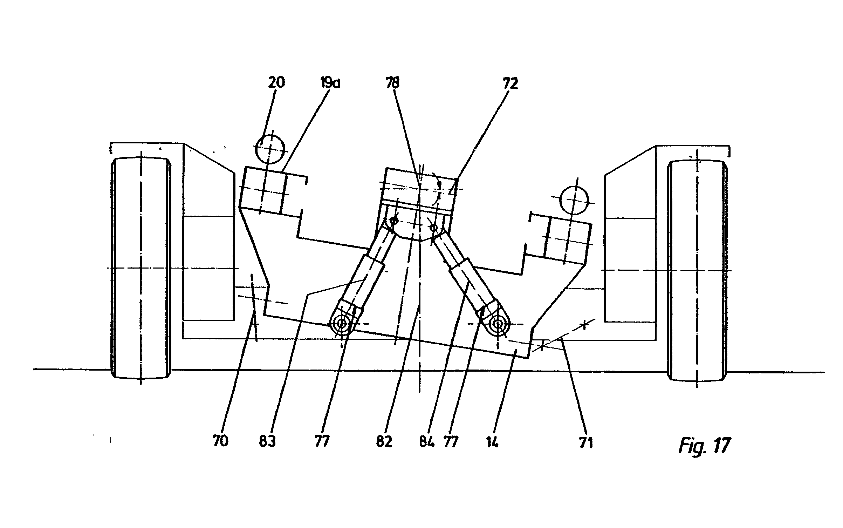

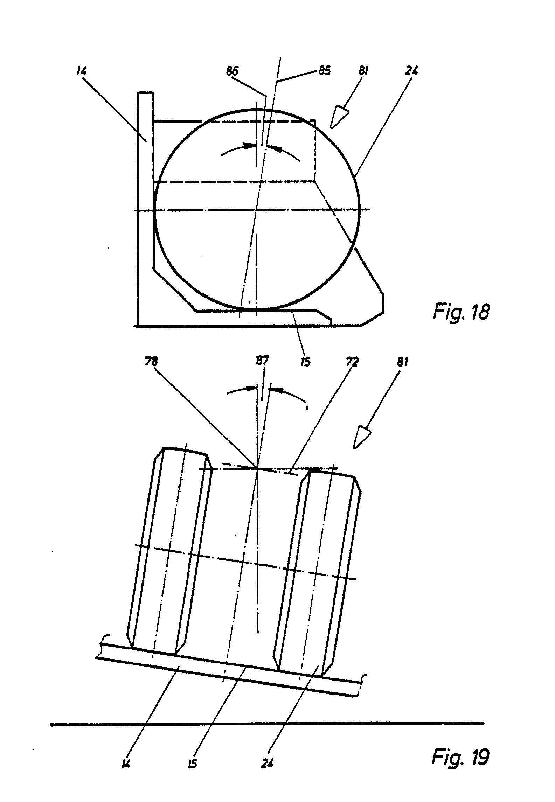

Die Fig. 16 und 17 zeigen die Stirnansicht der Schaufel 14, wobei erkennbar ist, daß hier zwei Fluidzylinder 77 vorhanden sind, deren Wirkungslinien 83, 84 (Fig. 17) sich im Bereich der Längsmittelebene 82 schneiden. Dadurch ist gewährleistet, daß sich die Schaufel 14 mit ihrer Unterstützungsfläche 15 jeder beliebigen Neigung des Flugzeugsfahrwerkes 81 (Fig. 18, 19) anpassen kann. Statt der Verwendung von zwei Fluidzylindern 77 ist auch ein einziger Fluidzylinder 77 möglich; für diesen Fall wäre es dann erforderlich, daß die Wirkungslinie dieses Fluidzylinders 77 in der Längsmittelebene 82 liegt.

In Fig. 17 ist eine Neigungsachse 72 gezeigt, die in Fig. 19 nochmals dargestellt ist.

Gemäß Fig. 18 weist das Bugfahrwerk 81 ein strichpunktiert angedeutetes Federbein 85 auf, dessen Längsachse einen Winkel 86 mit der Vertikalen bildet, um den erforderlichen Nachlauf des Bugrads 81 zu gewährleisten.

Aufgrund dieses konstruktiv vorgegebenen Winkels 86 kommt es zu einer Neigung des Flugzeugfahrwerks 81 beim Befahren von Kurven, wobei es aufgrund der starren Verbindung der Flugzeugachse mit dem Bugrad, das hier doppelt ausgebildet ist, und dem Federbein 85 zu einem Neigungswinkel 87 kommt, der durch eine gleichartige Neigung der Schaufel 14 mit ihrer Unterstützungsfläche 15 entsprechend der Neigungsachse 72 ausgeglichen wird (Fig. 19). Dadurch wird ein außerordentlich schonender Transport des geschleppten Fahrzeugs erreicht. Verspannungen im Bereich der Greif-, Einzugs- und Ausstoßvorrichtungen 28, 30 in Verbindung zu den Bugrädern 24 werden dadurch vermieden.

Es ist darauf hinzuweisen, daß nach der Erfindung das die Schaufel 14 am Fahrgestell 5 anlenkende Gestänge aus unteren Längslenkern 70, 71 und oberen Längslenkern 73, 74 nicht nur die Form eines Parallelogramms, sondern auch die eines Trapezes (das immer noch zwei parallele Seiten des in der Seitenansicht vom Trapez beschriebenen Vierecks aufweist) und darüber hinaus auch die eines unregelmäßigen Vierecks (wiederum in der Seitenansicht) mit unterschiedlichen Seitenlängen aufweisen kann, derart, daß sich infolge der unterschiedlichen Abstände der jeweiligen Anlenkpunkte nach den Gesetzen der Kinematik unterschiedliche Bewegungsverläufe der Schaufel bei deren Anheben und Absenken ergeben können. Beispielsweise können die oberen Längslenker länger ausgebildet sein als die unteren Längslenker, derart, daß die Schaufel 14 nicht parallel zu sich selbst verlagerbar geführt ist, sondern eine Kippbewegung durchführt, derart, daß beispielsweise in abgesenkter Stellung die Schaufel 14 nach vorne gekippt ist und mit ihrer Vorderkante auf dem Boden aufruht, so daß die Auflagefläche für das Bugrad zum Boden hin und auf das Bugrad zu geneigt verläuft, während nach dem Einziehen des Bugrades 24, sobald dasselbe auf der Schaufel 14 aufruht, beim Anheben der Schaufel ein Rückwärtsschwenken derselben erfolgt, so daß die ursprünglich am Boden aufliegende Auflaufkante der Schaufel schließlich in angehobener Stellung derselben gegenüber einer gedachten Horizontalebene höher liegt als das dem Fahrzeug zugewandte Ende der Schaufel, somit ihr Winkel, so daß allein durch die Schwerkraft praktisch bereits eine Arretierung des Bugrades 24 auf der Schaufel 14 erfolgt, nämlich dadurch, daß die zur Fahrzeugseite hin geneigte Unterstützungsfläche der Schaufel 14 das Bugrad unter dem Einfluß der Schwerkraft gegen die Anschlagfläche der Schaufel 14 laufen und dort zur Ruhe kommen läßt, die von dem im Winkel aufragenden Teil 16 der Schaufel 14 gebildet ist.

Ferner können die oberen und/oder unteren Längslenker 70, 71 bzw. 73, 74 jeweils als Fluidzylinder-Kolben-Einheiten ausgebildet sein, was erfindungsgemäß zusätzliche Möglichkeiten hinsichtlich Verlagerung der Schaufel 14 durch Schwenken um Horizontalachsen, Neigen um Längsachsen und Heben bzw. Senken in Vertikalrichtung, bzw. zu Kombinationen derartiger Bewegungen, eröffnet.

**Patentansprüche**

1. Schleppfahrzeug zum Manövrieren von Flugzeugen ohne Schleppstange, dessen Fahrgestell (5) zwischen den Rädern einer Radachse einen gabelförmigen Aufnahmeraum (8) aufweist, in dem eine mit einer Hubvorrichtung (13, 14, 53) zusammenwirkende ein- und ausfahrbare Greif- und Einzugsvorrichtung (28, 68) angeordnet ist, mittels welcher das Bugrad (24) des Flugzeuges erfaßbar und auf eine relativ zum Fahrgestell (5) heb- und senkbare Schaufel (14) ziehbar ist, **dadurch gekennzeichnet,** daß eine einzige Schaufel (14) zur Unterstützung des Bugrades (24) im Bereich der Wirkunglinie der Bugradlast vorhanden ist, und daß die Schaufel (14) um eine gedachte Längsachse in eine Winkellage zur Horizontalachse (11) stufenlos einstellbar ist (Winkel 72, Fig. 17).

2. Schleppfahrzeug nach Anspruch 1, dadurch gekennzeichnet, daß die Greif- und Einzugsvorrichtung (28, 68) mit der Schaufel (14) achsfest verbunden ist.

3. Schleppfahrzeug nach Anspruch 1, oder 2, dadurch gekennzeichnet, daß zusätzlich eine dem Abschieben des Bugrades (24) von der Schaufel (14) am Ende des Manövriervorganges dienende Ausstoßvorrichtung (30) mit der Schaufel (14) achsfest verbunden ist.

4. Schleppfahrzeug nach Anspruch 1, 2 oder 3 mit einer um eine Horizontalachse (11) kippbar angeordneten Schaufel (14), dadurch gekennzeichnet, daß die Horizontalachse (11) am Fahrgestell (5) angeordnet und die Kipplage der Schaufel (14) relativ zum Fahrgestell (5) gesteuert einstellbar ist.

5. Schleppfahrzeug nach Anspruch 4, dadurch gekennzeichnet, daß zur gesteuerten Einstellung der Kipplage der Schaufel (14) mindestens eine Fluidzylinder-Kolben-Einheit (37) als Hubvorrichtung vorhanden ist.

6. Schleppfahrzeug nach Anspruch 4 oder 5, gekennzeichnet durch einen mit seinem einen Ende an der Horizontalachse angelenkten, im wesentlichen vertikal verschwenkbaren Schwenkarm (13, 53), an dem die Schaufel (14) fest angeordnet und mit dem dieselbe anheb-, absenk- und schwenkbar ist.

7. Schleppfahrzeug nach Anspruch 1, dadurch gekennzeichnet, daß die Schaufel mittels eines Hubschlittens heb- und senkbar am Fahrgestell (5) angeordnet ist.

8. Schleppfahrzeug nach Anspruch 1, dadurch gekennzeichnet, daß die Schaufel (14) mittels eines Parallelogrammgestänges heb- und senkbar am Fahrgestell (5) angeordnet ist.

9. Schleppfahrzeug nach einem der vorhergehenden Ansprüche mit schwenkbaren Greifarmen (23) an freien Enden der zwei das Bugrad zwischen sich aufnehmende Träger aufweisenden Greif- und Einzugsvorrichtung (28,68), dadurch gekennzeichnet, daß der Angriffspunkt der Greifarme (23) oberhalb der Drehachse (40) des Bugrades (24) am Umfang desselben angeordnet ist.

10. Schleppfahrzeug nach Anspruch 6 und 9 mit zwei teleskopierbaren Trägern, dadurch gekennzeichnet, daß der Schwenkarm (13, 53) von den beiden Basiselementen (19a) der teleskopierbaren Träger (19a, 19) gebildet ist, deren fahrzeugseitige Enden um die Horizontalachse (11) schwenkbar sind.

11. Schleppfahrzeug nach Anspruch 6 und 9, dadurch gekennzeichnet, daß der Schwenkarm (13, 53) aus den beiden Trägern (50) besteht, die röhrenförmig ausgebildet und deren fahrzeugseitigen Enden um die Horizontalachse (11) schwenkbar sind, daß die beiden Träger jeweils nach innen zum Bugrad (24) hin in Längsrichtung verlaufende Führungsschlitze (52) aufweisen, daß in den Trägern (50) jeweils ein axial verschiebbarer Gleitschuh (54) geführt ist, der einen gegenüber der Wirkungslinie einer Zylinder-Kolben-Einheit (Kolben 55) exzentrisch um eine vertikale Achse (64) schwenkbaren Hebelkopf (56) aufnimmt, und daß am Schwenkende des Hebelkopfes (56) der jeweilige Greiferarm (23) angeordnet ist.

12. Schleppfahrzeug nach Anspruch 12, dadurch gekennzeichnet, daß die Verschwenkung des Hebelkopfes (56) in dem Gleitschuh (54) verriegelbar ist und daß in ausgefahrener Endlage des Gleitschuhs (54) in dem röhrenförmigen Träger (50) die Verriegelung zwischen Gleitschuh und Hebelkopf durch einen in seiner Achsrichtung und quer zum Gleitschuh bewegbaren Ausstoßbolzen (61) aufhebbar und gleichzeitig der Gleitschuh im Träger verriegelbar ist.

13. Schleppfahrzeug nach mindestens einem der vorhergehenden Ansprüche, dadurch gekennzeichnet, daß die Ausstoßvorrichtung (30) aus jeweils einer Fluidzylinder-Kolben-Einheit (31) besteht, deren eines Ende am Schwenkarm (13, 53) angelenkt ist und deren anderes Ende (Kolbenstange 32) ein Gleitstück (34) aufweist, das in einer achsparallel am Schwenkarm (13, 53) angeordneten Führungsschiene axial verschiebbar ist und an dem ein Ausschubarm (43) angeordnet ist (Fig. 6 und 15).

14. Schleppfahrzeug nach Anspruch 5, dadurch gekennzeichnet, daß die die Hubvorrichtung für die Schaufel (14) bildende Fluidzylinder-Kolben-Einheit (37) mit ihrem einen Ende am Fahrgestell (5) und mit ihrem anderen Ende in der Nähe der Schaufel (14) am Schwenkarm (13, 53) oder Träger (50) oder an dieser selber angreift:

15. Schleppfahrzeug nach Anspruch 1, dadurch gekennzeichnet, daß die Schaufel (14) über untere (70, 71) und obere Längslenker (73, 74) hebbar, senkbar und wahlweise in eine Winkellage neigbar am Fahrgestell (5) angeordnet und über Fluidzylinder (77) betätigbar ist, wobei die oberen und unteren Längslenker (70, 71; 73,74) ein Gestänge bilden, das einerseits am Fahrgestell und andererseits an der Schaufel (14) angelenkt ist.

16. Schleppfahrzeug nach Anspruch 15, dadurch gekennzeichnet, daß sich die Wirkungslinien (75, 76) der oberen Längslenker (73, 74) in einem einen Pendelpunkt (78) der Schaufel (14) bildenden Punkt auf der gedachten Längsachse schneiden.

17. Schleppfahrzeug nach Anspruch 16, dadurch gekennzeichnet, daß die unteren Längslenker (70, 71) annähernd parallel zur Fahrzeuglängsachse (79) angeordnet sind und mit ihren schaufelseitigen Anlenkpunkten (80) an jeweils einer Seitenwand der Schaufel (14) angreifen.

18. Schleppfahrzeug nach Anspruch 1 und einem oder mehreren der Ansprüche 15 bis 17, dadurch gekennzeichnet, daß die Schaufel (14) einer Neigung des Bugrades (81) selbsttätig anpaßbar ist.

19. Schleppfahrzeug nach Anspruch 1 und 18, dadurch gekennzeichnet, daß bei Vorhandensein nur eines einzigen Fluidzylinders (77) zum Heben und Senken der Schaufel (14) die Wirkungslinie dieses Fluidzylinders (77) in der senkrechten Längsmittelebene (82, Fig. 17) der Schaufel (14) liegt, welche die Fahrzeuglängsachse (79) enthält.

20. Schleppfahrzeug nach Anspruch 1 und 18, dadurch gekennzeichnet, daß bei Vorhandensein von zwei Fluidzylindern (77) zum Heben und Senken der Schaufel (14) die Wirkungslinien (83, 84) dieser Fluidzylinder (77) spiegelsymmetrisch zur Längsmittelebene (82) angeordnet sind.

21. Schleppfahrzeug nach Anspruch 20, dadurch gekennzeichnet, daß zur selbsttätigen Einstellung der Winkellage der Schaufel (14) die beiden Fluidzylinder bezüglich ihres Fluids kommunizierend miteinander verbunden sind.

22. Schleppfahrzeug nach Anspruch 21, dadurch gekennzeichnet, daß die kommunizierende Verbindung zwischen den beiden Fluidzylindern (77) absperrbar ist.

23. Schleppfahrzeug nach mindestens einem der vorhergehenden Ansprüche, dadurch gekennzeichnet, daß die ein- und ausfahrbare Greif- und Einzugsvorrichtung (28, 68) nebst Ausstoßvorrichtung (30) mit der Schaufel (14) in der Draufsicht jeweils im wesentlichen in H-Form ausgebildet ist.

24. Schleppfahrzeug nach Anspruch 15, dadurch gekennzeichnet, daß die Längslenker ein Parallelogrammgestänge bilden.

25. Schleppfahrzeug nach Anspruch 15, dadurch gekennzeichnet, daß die Längslenker ein Trapezgestänge bilden.

26. Schleppfahrzeug nach Anspruch 15, dadurch gekennzeichnet, daß die Längslenker in der Seitenansicht ein unregelmäßiges Viereck mit unterschiedlichen Seitenlängen bilden.

27. Schleppfahrzeug nach einem der Ansprüche 15, 24, 25 und 26, dadurch gekennzeichnet, daß die unteren Längslenker (70, 71) als Fluidzylinder-Kolben-Einheiten ausgebildet sind.

Fig. 1

Fig. 2

EP 0 437 286 A2

Fig. 3

Fig. 4

12

Fig. 5

Fig. 6

Fig. 7

66 50 53 68 54 58 62 61 63 51

55 57 56 59 Fig. 8

53 64 50 52 67 23

54 55 Fig. 9

66 54 65 IX 64

68

56

55 57 23 58 69 Fig. 10

EP 0 437 286 A2

Fig.11

17

Fig.12

18

Fig. 13

Fig. 14

Fig.15

Fig. 16

Fig. 17

Fig. 18

Fig. 19

24